# EUROPEAN PATENT APPLICATION

(11) **EP 1 968 267 A1**
(43) Date of publication of application: **10.09.2008**
(21) Application number: 06828413.2
(22) Date of filing: 20.12.2006
(51) Int. Cl.: H04L 12/66

(54) **MEDIA GATEWAY AND METHOD FOR REPORTING TERMINATION STATISTIC PARAMETER VALUE**

(30) Priority: 26.12.2005 CN 200510111989
(71) Applicant: Huawei Technologies Co., Ltd., Longgang District Shenzhen Guangdong 518129 (CN)
(72) Inventor: LIN, Yangbo, Guangdong 518129 (CN)
(74) Representative: Hengelhaupt, Jürgen
(86) International application number: PCT/CN2006/003508
(87) International publication number: WO 2007/073679

(57) **Abstract**

A media gateway (MG) and method for reporting the terminal statistic parameter value, the media gateway controller (MGC) may obtain the statistic parameter value of the terminal in real-time with the little performance expense in the frame of media gateway control protocol. The present invention expands one event whose parameter contains the statistic parameter identification using the event mechanism of media gateway control protocol, reporting the current corresponding to the statistic parameter according to the statistic parameter identification in the parameter when the event is triggered. Various optional trigger condition may be set in the event parameter, including the time length for reporting, the period for reporting, the designated statistic exceeding someone limit value etc. as well as any combination thereof. While the designated statistic parameter in the event parameter is reported, maintains the statistic parameter value to prevent from reporting affect, or resets the statistic parameter value.

## Description

This application claims the priority of Chinese patent application No. 200510111989.4, filed with the Chinese Patent Office on December 26, 2005, entitled "METHOD FOR REPORTING STATISTIC PARAMETER VALUE OF TERMINATION BY MEDIA GATEWAY", the content of which is hereby incorporated by reference in its entirety.

### Field of the Invention

The invention relates to the field of network and communication technologies, particularly to information exchange between a media gateway and a media gateway controller, and more particularly to a media gateway and a method for reporting a statistic parameter value of a termination by a media gateway.

### Background of the Invention

The Next Generation Network (NGN) and the 3rd Generation (3G) mobile communication have become two focuses recently.

In specifications, the NGN is defined preliminarily as a packet-based network, which can provide various services, including telecommunication services, and can utilize transfer techniques that support different bandwidths and are provided with Quality of Service (QoS) guarantee. The developing direction and scope of the NGN is defined.

At present, the NGN mostly adopts two key components for networking: a Media Gateway Controller (MGC) and a Media Gateway (MG). The MGC is responsible for the function of call control, and the MG for the function of service bearer, thereby realizing separation of the call control plane and the service bearer plane. The above two can evolve separately, so that it is possible to make full use of network resources, simplify equipment upgrade and service expansion, and lower the cost of development and maintenance greatly.

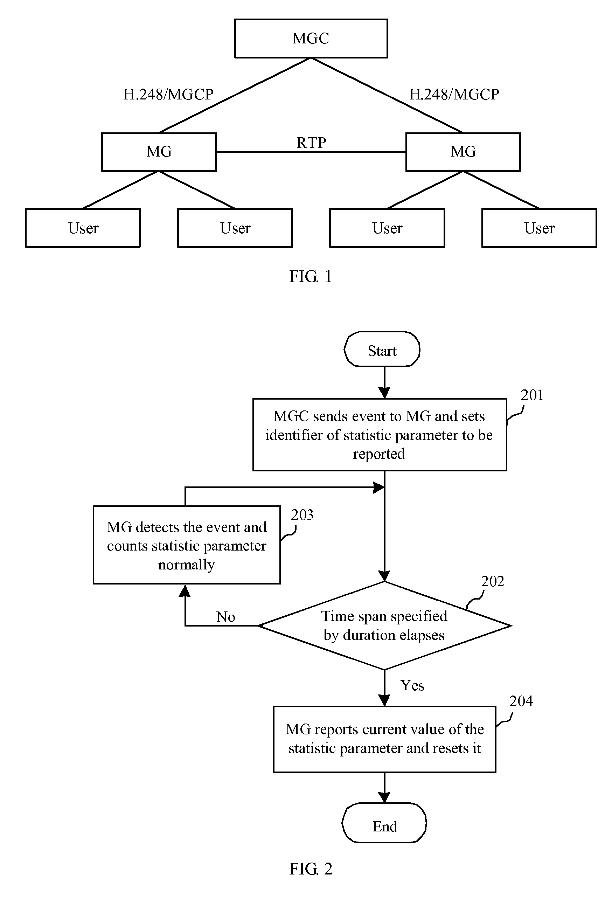

The media gateway control protocol is the main protocol for communication between an MGC and an MG. At present, the widely-used protocols include the Gateway Control Protocol (H.248/MeGaCo) and the Media Gateway Control Protocol (MGCP), and the communication protocol among MGs is the RealTime Transfer Protocol (RTP), as shown in Figure 1.

The H.248/MeGaCo is developed on the basis of the MGCP. Under the H.248 for example, an MG bears services by means of the resources on the MG. Those resources can be abstractly expressed as terminations, including physical terminations and ephemeral terminations. The physical termination is a physical entity of semi-permanent existence, such as a Time Division Multiplexing (TDM) channel. The ephemeral termination is a public resource that is obtained upon request and released after having been used, such as an RTP stream. The combination of terminations is abstractly expressed as a context. The relationship between terminations is usually expressed as a topology. A termination that has not been associated with other terminations is included by a special context called Null context.

In such an abstract model of protocol, connection of a call lie actually in operations of terminations and contexts, and the operations are performed by command requests and responses between the MGC and the MG. Command parameters, also called descriptors, are classified into property, signal, event and statistic.

To be specific, property represents the specification of resource requirements, usually sent to the MG by the MGC or set by the MG itself, such as a maximum or minimum value set for a jitter buffer; signal is used by the MGC to instruct the MG to operate the resources, such as play a dial tone, a ring back tone or a busy tone to a user; event is used by the MGC to instruct the MG to monitor status, such as monitor off-hook, hang-up, dialing and flash-hook performed by a user; and statistic represents the status of resource usage. The statistic parameters are usually calculated by the MG, and some of them can be enabled or disabled (i.e. activated or deactivated) selectively by the MGC. Certain parameters with a service correlation there-between are aggregated logically into a package.

At present, there are two methods for the MGC to acquire a current value of a statistic parameter (such as the number of packages sent, the number of packages received and the package loss rate) at the MG.

According to one of the two methods, the MGC sends to the MG a subtract request command aiming at a certain termination, and the MG sends to the MGC a subtract response command, which carries by default the current values of the statistic parameters enabled (i.e. activated) at the termination.

According to the other method, the MGC sends to the MG an AuditValue request command aiming at a certain termination, which carries the statistic parameters to be audited, and the MG sends to the MGC an AuditValue response command, which carries the current values of corresponding statistic parameters at the termination.

In practical applications, with the first method, a real-time change of a statistic parameter value of a termination at the MG can not be reported in a timely way; and with the second method, the performance of the MGC is affected greatly, and the MGC still can not learn real-time changes of certain statistic parameters of a termination at the MG.

By sending a subtract command to the MG by the MGC, a statistic parameter value of a termination can be obtained only when the termination ends up with participation of a certain call and exits from the context. Therefore, a real-time change of a statistic parameter value of a termination at the MG can not be reported in a timely way.

By sending an AuditValue command to the MG by the MGC to acquire a statistic parameter value of a termination, the MGC can acquire the statistic parameter value at any frequency, but relying upon the control of the MGC. Therefore, the performance of the MGC may be affected, especially when the audit is performed frequently. Another reason lies in that, a statistic parameter value at the MG may change randomly, for example, being beyond a certain extremum, and the change can not be foreseen by the MGC. Therefore, the MGC still can not obtain the values of certain statistic parameters of a termination at the MG in a timely way.

### Summary of the Invention

The invention is to provide a media gateway and a method for reporting a statistic parameter value of a termination by a media gateway, which enables the media gateway controller to obtain a statistic parameter value of a termination in real-time within the framework of the media gateway control protocol with a lower cost in performance.

An embodiment of the invention provides a method for reporting a statistic parameter value of a termination by a media gateway, including:
configuring and detecting an event at a media gateway, and setting an identifier of at least one statistic parameter to be reported in parameters of the event; and
reporting, by the media gateway, an value of the statistic parameter to a media gateway controller according to the identifier of the statistic parameter set in the parameters of the event when detecting that a trigger condition for the event is met.

The event is sent to the media gateway by the media gateway controller, or
the event is provisioned at the media gateway.

Another embodiment of the invention provides a media gateway, including:
a storage unit, configured to store an event for a statistic parameter to be reported as well as an identifier of the statistic parameter; and
a detection unit, configured to detect the event, and report a value of the statistic parameter to a media gateway controller according to the identifier of the statistic parameter set in parameters of the event when detecting that a trigger condition for the event is met.

Compared with the prior art, the embodiments of the invention utilize an event mechanism of the media gateway control protocol to extend an event and incorporate an identifier of a statistic parameter in the parameters of the event. When the event is triggered, a current value of the corresponding statistic parameter is reported according to the identifier of the statistic parameter in the parameters of the event.

Multiple selectable trigger conditions may be set in the parameters of the event, including a reporting duration, a reporting period, the specific statistic being beyond a certain extremum, and any combination thereof.

While the statistic parameter set in the parameters of the event is reported, the value of the statistic parameter is maintained to be unaffected by the reporting or is reset.

Because the invention adopts an event mechanism, there is no need for the MGC to send an audit command through an audit method, and the MGC only needs to process a statistic parameter value reported by the MG upon receipt. Therefore, the affection on the performance of the MGC is reduced to the least.

By setting a reasonable trigger condition, such as an extremum, in the event parameters, a real-time change of the QoS status at the MG may be reported in a timely way.

Setting a reporting period in the event parameters as required enables the MGC to acquire the QoS status at the MG at any frequency.

By resetting the statistic parameter when reporting, a net statistic value in a certain time period may be obtained at the next reporting.

Because the invention is implemented completely within the framework of the media gateway control protocol, the statistic parameters currently existing or possibly extended in the future may be utilized to a great extent and the cost of implementation is relative low.

### Brief Description of the Drawings

Figure 1 is a schematic diagram illustrating the networking of an MGC and MGs in the prior art;
Figure 2 is a flow chart illustrating a method for reporting a termination statistic parameter value by an MG according to a first embodiment of the invention;
Figure 3 is a flow chart illustrating a method for reporting a termination statistic parameter value by an MG according to a second embodiment of the invention;
Figure 4 is a flow chart illustrating a method for reporting a termination statistic parameter value by an MG according to a third embodiment of the invention;
Figure 5 is a flow chart illustrating a method for reporting a termination statistic parameter value by an MG according to a fourth embodiment of the invention;
Figure 6 is a flow chart illustrating a method for reporting a termination statistic parameter value by an MG according to a five embodiment of the invention; and
Figure 7 is a schematic diagram illustrating the structure of an MG according to an embodiment of the invention.

### Detailed Description of the Embodiments

For better understanding of the objects, technical solutions and advantages of the invention, the invention is described below in further detail by reference to the accompanying drawings.

By extending the H.248 protocol and within the framework of the protocol, the invention uses an Event/Notify mechanism to enable an MG to report a statistic parameter value actively according to a duration, a period or an extremum as required by the MGC. Because the invention is implemented completely within the framework of the H.248, the statistic parameters currently existing or possibly extended in the future may be reused to a great extent and the implementation is relatively easy.

Figure 2 illustrates a method for reporting a termination statistic parameter value by an MG according to a first embodiment of the invention, including the following steps.

Step 201: The MGC sends to the MG an event for which a current statistic parameter value is to be reported based on a certain condition. The event includes a duration parameter and an identifier of a statistic parameter to be reported. The duration parameter is a trigger condition for the event, indicating that the event is to be triggered after the time with a span specified by the duration parameter elapses from the receipt of the event. The identifier of the statistic parameter is related to an operation to be performed when the event is triggered.

Step 202: A judgment is made as to whether the time with the span elapses, according to the duration parameter of the event. If the time with the span elapses, go to step 204. If the time with the span does not elapse, go to step 203.

Step 203: The MG continues detecting the event and counting normally the statistic parameter. Then go to step 202.

Step 204: If the time with the span elapses, the MG reports the current value of the statistic parameter, and resets the counting of the statistic parameter. Therefore, a net statistic value in a certain time period may be obtained at the next reporting.

It can be seen from the above embodiment, because an Event/Notify mechanism is used, there is no need for the MGC to send an audit command through an audit method, and the MGC only needs to process a statistic parameter value reported by the MG upon receipt. Therefore, the affection on the performance of the MGC is reduced to the least.

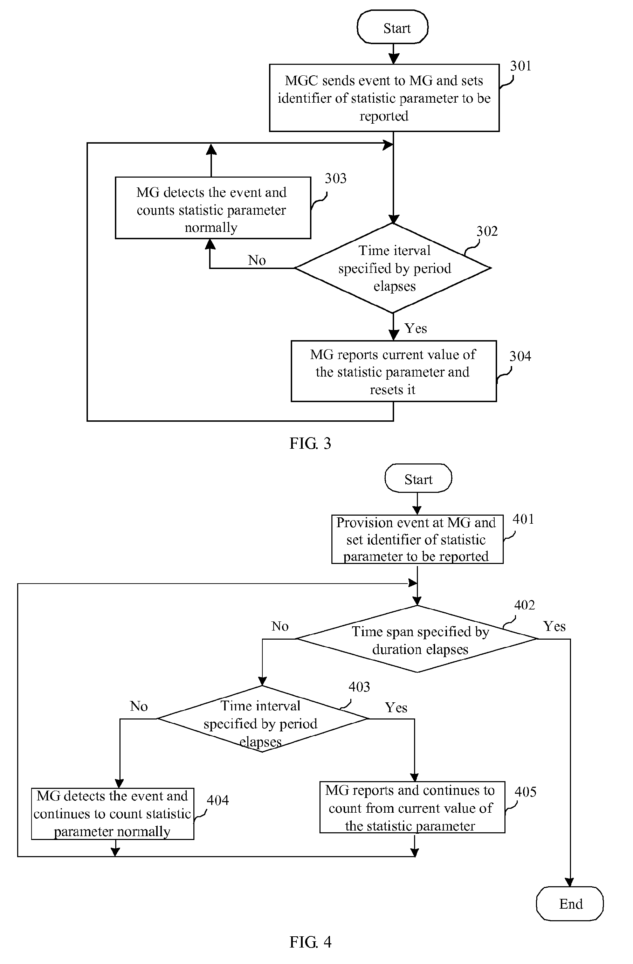

Figure 3 illustrates a method for reporting a termination statistic parameter value by an MG according to a second embodiment of the invention, including the following steps.

Step 301: The MGC sends to the MG an event for which a current statistic parameter value is to be reported based on a certain condition, the event carrying an identifier of a statistic parameter to be reported. Compared with the first embodiment, the difference lies in that a different parameter is included in the event. The parameter included in the event in the present embodiment is a period parameter. In other words, an operation of reporting the statistic parameter is triggered each time the time with an interval specified by the period parameter elapses from the receipt of the event.

Step 302: A judgment is made as to whether the time with the interval specified by the period parameter elapses. If the time with the interval elapses, go to step 304. If the time with the interval does not elapse, go to step 303.

Step 303 and step 304 are similar to step 203 and step 204 respectively.

It can be seen from the above embodiment, by setting a reporting period in an event parameter, the MGC is enabled to acquire the QoS status at the MG at any frequency as required.

Figure 4 illustrates a method for reporting a termination statistic parameter value by an MG according to a third embodiment of the invention, including the following steps.

Step 401: An event for which a current statistic parameter value is to be reported based on a certain condition is provisioned at the MG. The event includes both a duration parameter and a period parameter (the duration parameter being greater than the period parameter) and has set therein an identifier of a statistic parameter to be reported. The duration parameter and the period parameter specify a trigger condition for the event. In other words, the set statistic parameter is to be reported in the set period within the set duration.

Step 402: A judgment is made as to whether the time with a span specified by the duration parameter elapses. If the time with the span elapses, go to step 405. If the time with the span does not elapse, go to step 403.

Step 403: A judgment is made as to whether the time with an interval specified by the period parameter elapses. If the time with the interval elapses, go to step 405. If the time with the interval does not elapse, go to step 404.

Step 404: The MG detects the event and counts the statistic parameter. Then go to step 402.

Step 405: the MG reports the current value of the statistic parameter, and stores the current value for the future counting. Then go to step 402 as well. In other words, the counting of the statistic parameter is unaffected by the reporting of the statistic parameter by the MG in the present embodiment.

It can be seen from the above embodiment, a reporting duration and a reporting period may be set in the event parameters as required, enabling the MGC to acquire the QoS status periodically within the duration. Namely, the acquiring may be more flexible.

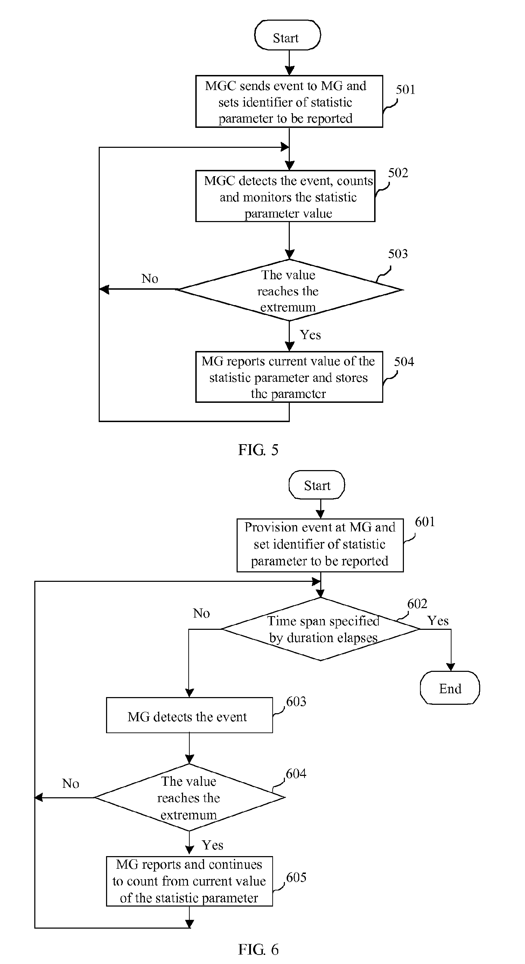

Figure 5 illustrates a method for reporting a termination statistic parameter value by an MG according to a fourth embodiment of the invention, including the following steps.

Step 501: An event for which a current statistic parameter value is to be reported based on a certain condition is provisioned at the MG. The event has set therein an identifier of a statistic parameter to be reported. Compared with the third embodiment, the difference lies in the trigger condition for the event. The parameter of the event in the present embodiment includes an extremum parameter. In other words, an operation of reporting the statistic parameter is triggered when the statistic parameter exceeds the extremum.

Step 502: The MG detects the event, counts the statistic parameter and monitors a change of the value of the statistic parameter.

Step 503: A judgment is made as to whether the value of the statistic parameter reaches the extremum, for example being beyond a maximum or minimum. If the value of the statistic parameter reaches the extremum, go to step 504. If the value of the statistic parameter does not reach the extremum, go to step 502.

Step 504: The MG also reports a current value of the statistic parameter, and continues to count normally from the value. Then go to step 502 as well.

It can be seen from the above embodiment, by setting a reasonable trigger condition, such as an extremum, in the event parameter, a real-time change of the QoS status at the MG may be reported in a timely way.

Figure 6 illustrates a method for reporting a termination statistic parameter value by an MG according to a five embodiment of the invention, including the following steps.

Step 601: An event for which a current statistic parameter value is to be reported based on a certain condition is provisioned at the MG. The event includes both a duration parameter and an extremum parameter and has set therein an identifier of a statistic parameter to be reported. The duration parameter and the extremum parameter specify a trigger condition for the event. In other words, the set statistic parameter is reported once the statistic parameter reaches the set extremum within the set duration.

Step 602: A judgment is made as to whether the time with a span specified by the duration parameter elapses. If the time with the span elapses, the reporting of the statistic parameter is terminated. If the time with the span does not elapse, go to step 603.

Step 603: The MG detects the event, counts the statistic parameter. Then go to step 604.

Step 604: A judgment is made as to whether the value of the statistic parameter reaches the extremum. If the value of the statistic parameter reaches the extremum, go to step 605. If the value of the statistic parameter does not reach the extremum, go to step 602.

Step 605: The MG reports a current value of the statistic parameter, and stores the current value for the future counting.

It can be seen from the above embodiment, a reporting duration and an extremum may be set in the event parameters as required, enabling the MGC to acquire a real-time change of the set QoS status at the MG within the set duration. Namely, the acquiring may be more flexible.

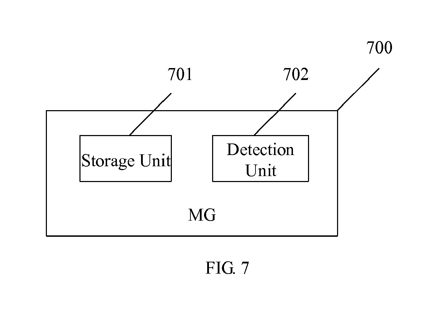

In addition, Figure 7 illustrates the structure of an MG 700 according to an embodiment of the invention, at which an event including at least one statistic parameter to be reported as well as an identifier of the statistic parameter is configured. The MG 700 includes:
a storage unit 701, configured to store the event for the statistic parameter to be reported as well as the identifier of the statistic parameter; and
a detection unit 702, configured to detect the event, and report an value of the statistic parameter to the MGC according to the identifier of the statistic parameter set in the parameters of the event when detecting that a trigger condition for the event is met.

The event is sent to the MG by the MGC, or
the event is provisioned at the MG.

The trigger condition for the event is determined by the pre-set event parameters, including a duration parameter and/or a period parameter,
the MG reports the value of the statistic parameter to the MGC after the time with a span specified by the duration parameter elapses; and/or
the MG reports the value of the statistic parameter to the MGC each time the time with an interval specified by the period parameter elapses.

Although the invention has been described and illustrated by reference to exemplary embodiments thereof, it shall be recognized by those skilled in the art that various modifications and variations can be made thereto without departing from the scope of the invention.

## Claims

1. A method for reporting a statistic parameter value of a termination by a media gateway, comprising:
configuring and detecting an event at a media gateway, and setting an identifier of at least one statistic parameter to be reported in parameters of the event; and
reporting, by the media gateway, a value of the statistic parameter to a media gateway controller according to the identifier of the statistic parameter set in the parameters of the event when detecting that a trigger condition for the event is met.

2. The method for reporting a statistic parameter value of a termination by a media gateway according to claim 1, wherein
the event is sent to the media gateway by the media gateway controller, or
the event is provisioned at the media gateway.

3. The method for reporting a statistic parameter value of a termination by a media gateway according to claim 1, wherein
the trigger condition for the event is determined by the pre-set event parameters, including a duration parameter, and
the media gateway reports the value of the statistic parameter to the media gateway controller after a time with a span specified by the duration parameter elapses.

4. The method for reporting a statistic parameter value of a termination by a media gateway according to claim 1, wherein
the trigger condition for the event is determined by the pre-set event parameters, including a period parameter, and
the media gateway reports the value of the statistic parameter to the media gateway controller each time a time with an interval specified by the period parameter elapses.

5. The method for reporting a statistic parameter value of a termination by a media gateway according to claim 1, wherein
the trigger condition for the event is determined by the pre-set event parameters, including a duration parameter and a period parameter, and
the media gateway reports the value of the statistic parameter to the media gateway controller each time a time with an interval specified by the period parameter elapses, until a time with a span specified by the duration parameter elapses.

6. The method for reporting a statistic parameter value of a termination by a media gateway according to claim 1, wherein
the trigger condition for the event is determined by the pre-set event parameters, including extremum parameters, and
the media gateway reports the value of the statistic parameter to the media gateway controller when the value of the statistic parameter exceeds limit values specified by the extremum parameters.

7. The method for reporting a statistic parameter value of a termination by a media gateway according to claim 1, wherein
the trigger condition for the event is determined by the pre-set event parameters, including a duration parameter and extremum parameters, and
the media gateway reports the value of the statistic parameter to the media gateway controller when the value of the statistic parameter exceeds limit values specified by the extremum parameters within a time with a span specified by the duration parameter.

8. The method for reporting a statistic parameter value of a termination by a media gateway according to any one of claims 1 to 7, wherein the media gateway reports the value of the statistic parameter to the media gateway controller and continues to count after resetting the value of the statistic parameter.

9. The method for reporting a statistic parameter value of a termination by a media gateway according to any one of claims 1 to 7, wherein the media gateway reports the value of the statistic parameter to the media gateway controller and continues to count from the current value of the statistic parameter.

10. The method for reporting a statistic parameter value of a termination by a media gateway according to any one of claims 1 to 7, wherein the media gateway determines, according to a definition of the statistic parameter or an instruction of the media gateway controller, whether to continue to count after resetting the value of the statistic parameter or to continue to count from the current value of the statistic parameter after reporting.

11. A media gateway, comprising:
a storage unit, configured to store an event for a statistic parameter to be reported as well as an identifier of the statistic parameter; and
a detection unit, configured to detect the event, and report a value of the statistic parameter to a media gateway controller according to the identifier of the statistic parameter set in parameters of the event when detecting that a trigger condition for the event is met.

12. The media gateway according to claim 11, wherein
the event is sent to the media gateway by the media gateway controller, or
the event is provisioned at the media gateway.

13. The media gateway according to claim 11, wherein
the trigger condition for the event is determined by the pre-set event parameters, including a duration parameter and/or a period parameter,
the media gateway reports the value of the statistic parameter to the media gateway controller after a time with a span specified by the duration parameter elapses, and/or
the media gateway reports the value of the statistic parameter to the media gateway controller each time a time with an interval specified by the period parameter elapses.
